# EUROPEAN PATENT APPLICATION

(11) **EP 2 482 213 A1**
(43) Date of publication of application: **01.08.2012**
(21) Application number: 11152793.3
(22) Date of filing: 31.01.2011
(51) Int. Cl.: G06F 17/50

(54) **Simulation apparatus and method for simulation of energy use in a data center**

(71) Applicant: FUJITSU LIMITED, Kawasaki-shi, Kanagawa 211-8588 (JP)
(72) Inventor: Snelling David, Flackwell Heath, Buckinghamshire HP10 9L (GB); Chow Peter, Gillingham, Middlesex ME7 3AH (GB); van den Berghe, Sven, Marlow, Middlesex SL7 3LE (GB)
(74) Representative: Wilding, Frances Ward

(57) **Abstract**

There is provided a simulation apparatus operable to simulate energy use in an enclosure containing devices including at least one heat source, the simulation apparatus comprising a fluid dynamics simulator arranged to simulate airflow and cooling within the enclosure; and a device simulator arranged to simulate power input and heat output of the devices; wherein the simulation apparatus is operable in a main cycle in which each of the fluid dynamics simulator and device simulator carries out a set of iterative simulation loops, the fluid dynamics simulator being initialised in a first loop of a set of loops with at least one start value derived from a previous loop of the device simulator, or the device simulator being initialised in a first loop of a set of loops with at least one start value derived from a previous loop of the fluid dynamics simulator.

## Description

The present invention relates to the simulation of energy use and in particular relates to simulation of energy use in an enclosure containing devices including at least one heat source. As energy becomes increasingly expensive and natural resources become scarcer, there is more use of simulations to build and/or optimise the running of equipment. Many electrical devices, such as computing devices, produce heat as a byproduct and require cooling. Other devices which may be considered for such simulation are specifically designed to produce heat or to cool produce, such as gas-powered ovens, furnaces, chillers in supermarkets or distribution warehouses etc. In all these cases, simulation can be used to determine, for example, what level of energy input, whether in the form of electricity, gas, or some other energy source, produces the most efficient functioning of the device in question.

One example of the use of such simulation is in data centres.

A data centre is a facility used to provide computer systems and possibly also associated components, such as storage systems. Data centres are an essential and mission critical element in today's society and businesses. They are the base infrastructure of Cloud Computing. The use of data centres is also increasing.

Data centres use a large amount of energy and produce a lot of waste heat so their efficient design and management is important. One aim is to minimise energy consumption for running and cooling computer servers in the data centre, thus reducing carbon emissions and helping the environment. On the business bottom line, lowering costs and maximizing server utilities can be keys to competitive advantage.

Simulation is becoming a valuable tool to achieve efficient design and management of data centres. The most common type of simulation is Computational Fluid Dynamics (CFD) performed during the design of a data centre to optimise the flow of air in a hall and ensure the most efficient delivery of cooling to the data centre equipment. This type of simulation is however computationally intensive and requires a high level of computing resource. Another type of simulation that is increasing in use is determination of the overall heat and power response of the data centre through a network of nodes (examples include DCPro from the US Department of Energy). Simulation of individual items of data centre equipment is also performed routinely, for example to derive individual efficiency.

The invention aims to provide a resource-efficient and accurate way of simulating heat producing devices in an enclosure. According to one embodiment of a first aspect of the invention there is provided a simulation apparatus operable to simulate energy use in an enclosure containing devices including at least one heat source, the simulation apparatus comprising a fluid dynamics simulator arranged to simulate airflow and cooling within the enclosure; and a device simulator arranged to simulate power input and heat output of the devices; wherein the simulation apparatus is operable in a main cycle in which each of the fluid dynamics simulator and device simulator carries out a set of iterative simulation loops, the fluid dynamics simulator being initialised in a first loop of a set of loops with at least one start value derived from a previous loop of the device simulator, and/or the device simulator being initialised in a first loop of a set of loops with at least one start value derived from a previous loop of the fluid dynamics simulator.

Thus, embodiments of the invention combine a fluid dynamics simulator with a simulator of devices, feeding a recent result of one simulator into the other (and possibly also vice versa) so that they operate in a coupled way. The inventors of the present invention have surprisingly found that this coupling not only manages to model both the airflow and individual device characteristics but also allows a resource-efficient implementation. A further advantage of the way that the two simulators are coupled is that they can be developed and written independently, with only certain values being provided from one simulator to the other. In some embodiments, the feed of start values is in one direction only, for example from the fluid dynamics simulator to the device simulator only. However, most embodiments give two-way coupling between the simulators, which may lead to better simulation convergence.

References herein to devices should be taken to include devices which use energy/power including electrical devices such as servers or, at a different end of the size range, components on a circuit board. Non-electrical devices such as gas-powered devices are also included. Equally, the term enclosure refers to any volume which can be viewed as enclosed for the purposes of the fluid dynamics simulator. The enclosure could be a hall or building of a data centre, a (smaller) room or part of a hall, or a casing surrounding a circuit board, at the other end of the size range. The power input described can be electrical power or any other way of energy provision. In this application, heat may be defined as the transfer of energy between bodies at different temperatures. Thus heat (or heat transfer) can be measured for example in joules per second.

The skilled reader will appreciate that each set of iterative simulation loops may include only one loop (if there has been no change in conditions for example), more than one loop or many loops. The number of loops carried out by the fluid dynamics simulator and device simulator is likely to be different, and depend on the individual simulation parameters. For the very first iteration of the main cycle, the initialisation will have to be without information from the other simulator or with a guessed start value or a start value from the last time that the simulation was operated. In subsequent main cycles, usually the most recent loop of the other simulator will be used to provide the start value for either of the two simulators. More complex systems may have an assessment system which rates outcomes of the loops and may discard later values in favour of the value which for some particular consideration appears to be appropriate for use as a start value. Thus a most recent value which is outside a general trend or outside predetermined limits, for example, may be discarded.

Although it is possible that there is a single heat source only for simulation in the enclosure in the form of a heat source, in many embodiments there is more than one device. Specifically the enclosure may contain at least one heat extractor (a device that cools the enclosure). This is the situation, for example, in many data centres which contain a plurality of server units (heat sources) and a plurality of computer room air conditioning units and/or chillers (heat extraction devices) which are used with convective heat transfer to extract heat out of the enclosed domain. It is also the case, for example, on the mother board of a PC or other computer, with its CPU and memory, power supply unit or connectors, fan(s) and other typical components.

The start value (we use the singular for simplicity in the following, but there are likely to be a plurality of start values) derived from the previous loop of the other simulator may represent a variable calculated by the other simulator which is useful for the functioning of the simulator in question. For example the variable could be temperature or heat. In many embodiments, the start values represent heat for the fluid dynamic simulator and/or the device simulator. The fluid dynamics simulator can take the individual heat output and/or heat extracted from the various devices in the simulation and determine the airflow and cooling within the enclosure. Thus it can provide a start value to the device simulator that represents heat delivered to any devices acting as heat extractors. Since this start value can take into account the airflow and the combined effect of all the devices, it can produce a more accurate start value than the device simulator alone. Conversely, the device simulator itself can give an accurate picture of heat output by any device acting as a heat source (and this can include heat extractors which themselves produce heat, as well as having a cooling effect). Such start values will be more accurate than any assumed value previously used in a pure fluid dynamics simulation.

In preferred embodiments, an internal value converter is operable to derive the start value used in the device simulator from a value produced in the fluid dynamics simulator and conversely to derive the start value used in the fluid dynamics simulator from a value produced in the device simulator. This is because the fluid dynamics simulator and device simulator may use different quantities. Thus for example, the fluid dynamics simulator is likely to use a representation of temperature and airflow in 3D space and the device simulator is more likely to allot heat that is produced to the devices within the enclosure. Preferably therefore the fluid dynamics simulator uses and/or produces values related to temperature and airflow at a specified surface, whereas the device simulator uses and/or produces device identifiers and values related to heat produced by the devices. The internal value converter can for example match a 2D surface defined in the fluid dynamic simulator to a device ID and convert between heat output and temperature. Airflow rates for the conversion can come from a database or, in more advanced implementations, from simulation of the devices themselves in the network simulator.

In most implementations the simulator produces various outputs, some or all of which are used for start values in the other simulator, with or without previous internal conversion.

In preferred embodiments, the simulation apparatus operates in a main cycle which includes a set of loops for each of the fluid dynamic simulator and device simulator. The loop sets may be carried out in parallel or sequentially. Preferably, a loop controller is operable to determine that a set of loops for the fluid dynamics simulator and a set of loops for the device simulator is to be carried out at the same time, as parallel sets of iterative simulation loops, or to determine that the sets of loops are to be carried out one after the other and in this case whether a set of loops for the fluid dynamics simulator or a set of loops for the device simulator is carried out first. In an alternative, the timing of the loop sets is fixed, and no controller is required.

At the end of the main cycle, there may be provision for a repeat main cycle. That is, once the outcomes of the simulators have been produced, there may be a further main cycle in which they are effectively swapped between the two simulators. Preferably, a joint simulator convergence controller is operable to compare an outcome of the fluid dynamics simulator after its set of loops with an outcome of the device simulator after its set of loops and to repeat the main cycle as a repeat main cycle if the outcomes have not converged. For example, convergence can be determined according to a comparison of heat produced by the devices according to the device simulator and the rate of airflow and temperature at that point by the fluid dynamics simulator. If these figures do not match, or do not match to a required degree, then the main cycle can be repeated.

In a repeat main cycle it may not be necessary to include a set of loops for the device simulator or a set of loops for the fluid dynamics simulator. For example, it may not be necessary to carry out the fluid dynamics simulation for a minor alteration in load, but the device simulation may be necessary. Preferably therefore, the loop controller is operable to determine for a repeat main cycle whether a set of loops for the device simulator or fluid dynamics simulator is to be omitted. Omission of either the device simulation or fluid dynamics simulation can be advantageous in that it can save computing resources.

The number of loops in a set of loops for each simulation can be set or variable. If the number of loops is set it can be different for the fluid dynamics simulator and for the device simulator, as mentioned above. Preferably however the number of loops is variable and there is provided an individual simulator convergence controller operable to end a set of loops once a required degree of convergence of successive loops is reached.

External conditions, such as external temperature and humidity may be taken into account in one or both simulators.

Thus an external condition input may be operable to input external conditions in a required format for application before the iterative simulation loops in a main cycle (for example as part of the main cycle, or before the main cycle). The input may also act as a converter to convert the external conditions into the required format. Alternatively or additionally, external conditions can be input into the simulator(s) during a set of loops.

At the simplest level, the device simulator may provide simulation of a single heat source. However, most applications will be more complex, in which case a network simulator is provided which models the devices using a logical network of interconnected nodes, each node representing a device and interconnects representing flows of energy between the devices. For example each node may have given characteristics which determine its output in terms of heat in response to an input in the form of power, such as electricity. A network simulator is not necessarily representative of the spatial layout of the enclosure (and may not describe physical dimensions, as such) but shows connections between the nodes. For example, heat flowing from major heat sources in the enclosure will form an interconnect either directly to a heat extractor or via a "split", which divides heat flows in a defined proportion between different heat extractors, (for example 40%/60%).

The fluid dynamics simulator may be any that is suitable for the purpose of modelling airflow and cooling within the enclosure. Preferably, it models the enclosure as a 3D space with airflows and temperature gradients between the devices in the enclosure. The fluid dynamics simulator may thus comprise or make use of a 3D model tool which can create and/or simplify and/or provide suitable parameters for a 3D model. Often, data centres and other enclosures are only drawn up as a 2D plan and the 3D model tool can be operable to input such a plan of a building or PCB for example and output a 3D model. The model can be based on user data. For example the height of servers in a data centre may be known and input by the user. Alternatively standard data can be used. Alternatively or additionally the 3D model tool can be used to simplify the geometry of a 3D model for use and simulation. If the 3D model has intricate features and/or curved portion(s), it can be resource intensive in simulation. Thus simplification of the geometry can be an important step of simulation. Alternatively or additionally, the 3D model tool can be used to set boundaries and external conditions for the fluid dynamics simulation.

As set out above, one advantage of invention embodiments is that the methodology of the fluid dynamics simulator and the device simulator can be completely separated. For example, one simulation method may be changed without effecting the other as long as the outcome of the simulator can still be converted for use in the loops of the other simulator. It therefore follows that the fluid dynamics simulator and device simulator can be provided as separate pieces of software. This aids their separate modification. Preferably, a single interface gives access to the simulation apparatus for the user, who need not be aware of the (separate) coding of the fluid dynamics simulator and device simulator.

According to an embodiment of a second aspect of the present invention there is provided a method of simulating energy use in an enclosure containing devices including at least one heat source, the method comprising simulating airflow and cooling within the enclosure using a fluid dynamics simulation and simulating power input and heat output of the devices using a device simulation; wherein a main cycle is provided in which each of the fluid dynamics simulation and device simulation operates in a set of iterative simulation loops, the fluid dynamics simulation being initialised in a first loop of a set of loops with at least one start value derived from a previous loop of the device simulation, and the device simulation being initialised in a first loop of a set of loops with at least one start value derived from a previous loop of the fluid dynamics simulation.

The invention can be implemented in digital electronic circuitry, or in computer hardware, firmware, software, or in combinations of them. The invention can be implemented as a computer program or computer program product, i.e., a computer program tangibly embodied in an information carrier, e.g., in a machine-readable storage device or in a propagated signal, for execution by, or to control the operation of, one or more hardware modules. A computer program can be in the form of a stand-alone program, a computer program portion or more than one computer program (for example, one for the device simulation, one for the fluid dynamics simulation and one to run the overall method) and can be written in any form of programming language(s), including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites.

Method steps of the invention can be performed by one or more programmable processors executing a computer program to perform functions of the invention by operating on input data and generating output. Apparatus of the invention can be alternatively implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

According to embodiments of a third aspect of the invention there is provided a computer program, which when downloaded onto a computing apparatus provides the simulation apparatus according to any of the preceding apparatus claims or which when executed on a computing apparatus carries out the method of the preceding method claim.

The three aspects of the invention effectively relate to the same subject matter and therefore features and/or sub-features defined as part of the first aspect can be used in the second and third aspects. Moreover, separately defined functionality can use the same physical parts (for example processor and memory) to achieve this functionality. For instance, the separately defined controllers may all form part of the same controller.

The invention is described in terms of particular embodiments. Other embodiments are within the scope of the following claims. For example, the method steps of the invention can be performed in a different order and still achieve desirable results.

One or both of the simulators may be sub-divided into spatial sections where this appears advantageous.

Preferred features of the present invention will now be described, purely by way of example, with reference to the accompanying drawings, in which:-
Figure 1 is a flowchart showing a method in a generalised embodiment of the present invention;
Figure 2 is a diagram of hardware used in implementing embodiments of the present invention;
Figure 3 is a flowchart of an embodiment of the invention in which the fluid dynamics simulator and device simulator operate concurrently;
Figure 4 is a flow diagram of an embodiment in which the fluid dynamics simulator and device simulator operate sequentially;
Figure 5 is an overall information diagram of the interaction between the fluid dynamics simulator and device simulator;
Figure 6 is a floor plan for a data centre;
Figure 7 is a 3D representation of the data centre produced from the floor plan of Figure 6;
Figure 8 is a 3D representation of temperature contours in the data centre of Figures 6 and 7;
Figure 9 is a 3D representation of both temperature contours and airflow streamlines in the data centre of Figures 6 and 7;
Figure 10 is a network diagram used in a network simulator according to invention embodiments; and
Figure 11 is a layout of a PCB which can be simulated in embodiments of the present invention.

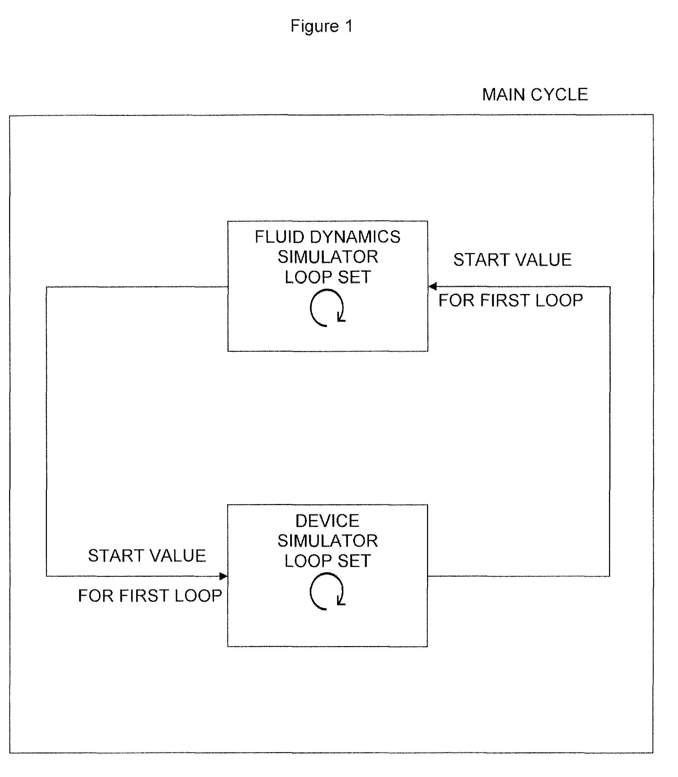

Figure 1 illustrates the basic concept behind invention embodiments. Simulation is carried out in a fluid dynamics simulator and in a device simulator. The two simulators are coupled and can both produce steady-state simulation, using iterative calculations converging to a steady output. Within a main cycle, the device simulator runs in a set of loops. This set of loops provides a start value for the first loop of a set of loops in the fluid dynamics simulator. The fluid dynamics simulator also operates in a separate set of loops and it in turn provides the start value for the first loop for a set of device simulator loops. If only one-way coupling is provided between the simulators, one of the start value inputs is omitted.

This overall diagram does not show the very first set of loops in a main cycle, in which the start value for at least one of the fluid dynamics simulator and device simulator must be provided without coupling or by way of an informed guess or a previous simulation run.

The inventors have come to the realisation that each type of simulation has its advantages and disadvantages and reveals important information about part of the operation of a data centre or other modelled system. Generally, network based simulators are low in computing and memory requirements and so quick to execute but they do not predict how the airflow changes in response to changes to the heat created by servers. On the other hand, CFD simulators are high in computing and memory requirements and predict detailed air flows but they provide no response of general data centre equipment to the changes in air flow. There is no easy way to combine the benefits of both simulation types without creating a completely new simulator. However, any new simulator would entail a single design incorporating both types of simulation.

According to invention embodiments, the two simulator types work together in a seamless way, but are not integrated so that designers and engineers can develop ideas and prototypes holistically - using the best in each simulator class to provide a simulation system that is efficient and flexible and accurate for various models and classes of applications.

Embodiments of the invention overcome the inefficiency in the prior art by coupling the device (or "network") and CFD (or "physics") classes of simulators together while keeping them distinct to gain the benefits of each. Calling and running a physics-class simulator can allow calculation of detailed spatial and temporal outcomes in regions or zones of interest which can be passed to the network-class simulator to provides values that may be inadequately defined otherwise. For example, a physics simulation may allow the accurate distribution of heat to individual pieces of equipment in a network simulation that might otherwise be aggregated into a single node. Embodiments of the invention provide all the necessary coupling and possibly also 3D model creation to achieve a seamless simulation system. This offers a unique new option that fills a gap in the known simulation systems. We call this coupled approach the "hybrid" simulator.

One physical effect of invention embodiments can be reduced energy use of the data centre or computer room. Another effect can be implementing better energy scheduling or justifying changes in layout.

The hybrid simulator of invention embodiments can use modest computing power (such as high-end PC) and thus provide preliminary results/data to decide when a fuller physics-class simulation is required or not. This can be a valuable quick turnaround option in mission critical situations that require dynamic functionalities that network simulators cannot provide.

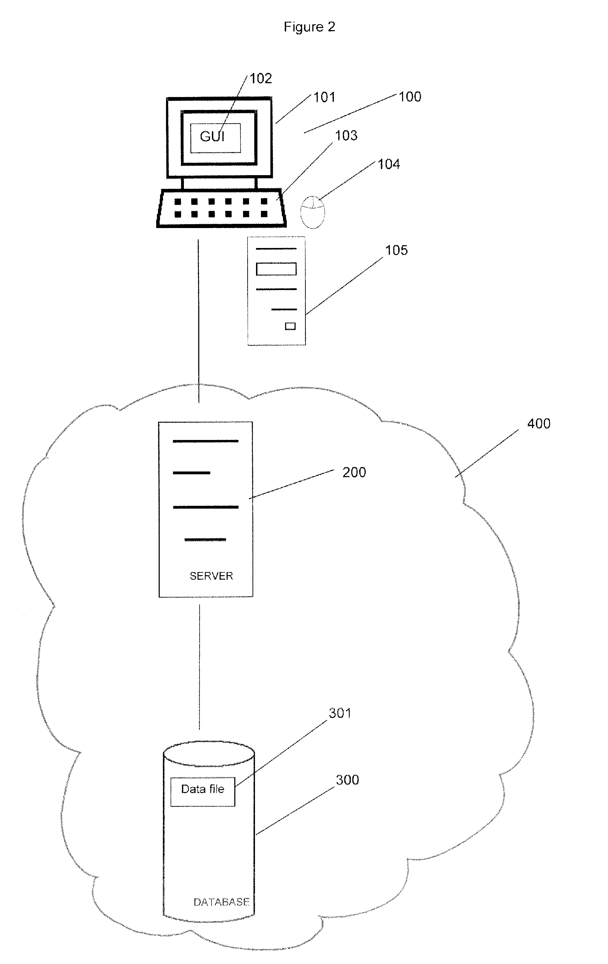

Figure 2 is a schematic diagram illustrating components of hardware that can be used with invention embodiments.

In one scenario, the invention embodiments can be brought into effect on a simple stand-alone PC or terminal 100 shown in Figure 2. The terminal shown here comprises a monitor 101, shown displaying a GUI 102, a keyboard 103, a mouse 104 and a tower 105 housing a CPU, RAM, one or more drives for removable media as well as other standard PC components which will be well known to the skilled person. Other hardware arrangements, such as laptops, iPads and tablet PCs in general could alternatively be provided. Software for carrying out the method of invention embodiments and/or any data files required for the simulation (for example holding external conditions and input data) may be downloaded, for example over a network such as the internet, or using removable media. Simulation results can be written onto removable media or downloaded over a network.

Alternatively, PC100 may act as a terminal and use one or more servers 200 to assist in carrying out the methods of invention embodiments. In this case, data file(s) 301 and/or software for carrying out the method of invention embodiments may be accessed from database 300 over a network and via server 200. The server 200 and/or database 300 may be provided as part of a cloud 400 of computing functionality accessed over a network to provide this functionality as a service. In this case, PC 100 may act as a dumb terminal for display, and user input and output only. Alternatively, some or all of the necessary software may be downloaded onto the local platform provided by tower 105 from the cloud for at least partial local execution of the method of invention embodiments.

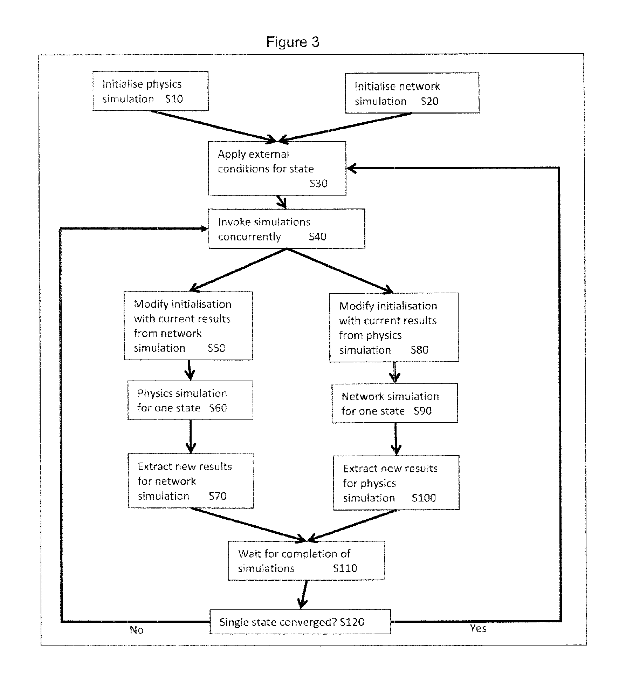

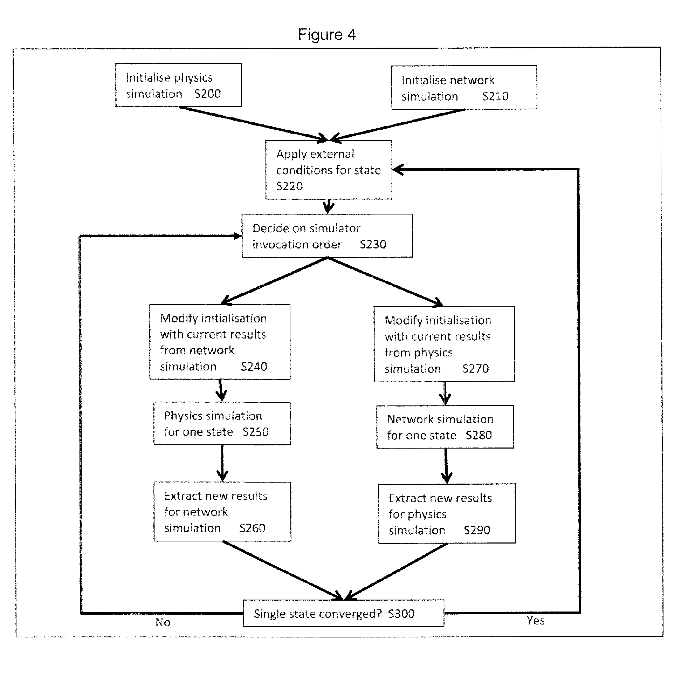

Figures 3 and 4 each show a slightly more detailed embodiment. In Figure 3, the simulators are invoked concurrently. In contrast, Figure 4 shows an embodiment in which the simulators are invoked in a certain order, one before the other. Thus the way in which the start values are provided to the simulators is slightly different. However, both embodiments share the basic coupling of the two simulators.

Looking at Figure 3 in more detail, steps S10 and S20 (which may run in parallel) start up the two simulators. The network simulation in step S20 refers to the device simulator and the physics simulation in step S10 refers to the fluid dynamics simulator. In step S30 external conditions are applied for one given state or time instance. The hybrid simulation can be initialised for the very first loop by converting external conditions (for example information technology (or IT) load, weather etc to the required format for each component simulator. Also, each simulator in a hybrid simulation may have (different) requirements for input data and for the representation of this input data. The hybrid simulation may be initialised by initialising each simulator using a database of static information such as floor plans, electrical and other layout diagrams, CAD models and equipment specifications. Such a database is shown in Figure 2.

In step S40 both simulations are invoked concurrently. Although the simulations run in parallel, the skilled person will appreciate that they need not take exactly the same amount of time or start or end at exactly the same moment. Looking first at the physics simulation, in step S50 the initialisation of the simulation is supplemented with results from the network simulation. The mutually influenced input data (input data for one simulator that is changed by the execution of the other simulator) can be initialised using an intelligent guess, or a previous similar run.

The order of input of external conditions and other input data (including mutually influenced input data) is not limited to that shown in this diagram or Figure 4; any appropriate input moment can be selected according to invention embodiments.

In step S60 the physics simulation is carried out for one time instance or state. The time instance may, for example, reflect inputs at time-spaced intervals, whereas the different states could be, for example, external temperature. In many embodiments this simulation takes place in a set of simple loops, which converge to a steady state output. In more complex simulations, one or more variables can be changed during the simulation loops to model changes and transient conditions. For example, an air conditioning unit in a data centre may be turned on or off. Transient conditions include time-dependent elements such as server workload over a 24 hour period or jobs in a data queue and inputs of sensors etc, over a particular time period.

In step S70 the results are extracted for use in the network simulation. Turning to the network simulation next, for steps S80 - S100 essentially the same considerations apply analogously as for steps S50 - S70 in the physics simulation. In step S110, there is an optional wait if one simulator has finished before the other. Then the outputs are compared. If comparable outputs are sufficiently similar, then the hybrid simulator will go on to simulate the next state or time instance or indeed to finish the simulation. The same results may be used as for the determination of convergence described hereinbefore. If the results however differ or differ by more than a predetermined margin, then the simulations are run again in a new main cycle. In some circumstances such a repeat main cycle may omit running of one of the simulators. In particular, the physics simulator is more resource intensive. It may therefore be omitted, particularly if the expected changes in the airflow do not merit recalculation As an example, a change in weather conditions may effect the overall temperature and efficiency of the devices, but not have a strong impact on the air flow.

The same general comments apply to Figure 4 as to Figure 3 above but the simulators are invoked in specified order. In step S230, the hybrid simulator decides on the simulator invocation order. A controller process may determine which simulator to execute. For example if there is a large change in IT load, it might be optimal to execute the network simulator first since there will be a large change to heat produced in the servers due to the IT load change.

In Figure 4, the network simulation is shown as being executed first in steps S240-260. This means that it will have to be initialised with the outcome of the previous single state or time instance physics simulation (previous main cycle). Thus in the first loop of a new simulation, an intelligent guess is required. Conversely, in the order shown, the physics simulation can be initialised with the outcome of steps S240 -260. Of course if the simulators are invoked in the opposite order, then an intelligent guess or results of a previous main cycle for the network simulation will be needed to initialise the physics simulation but the outcome of the physics simulation can be used to initialise the network simulation. Further description of the steps is not included here and the reader is referred to equivalent steps shown in Figure 3. In general terms, the component simulators are coupled, and the results of one simulation influences the input conditions for the other. The hybrid simulation of these embodiments has an internal iterative cycle that invokes each simulator in turn until the output of both does not change significantly (for example so that the balance of energy is conserved and the summation of input, output and sources equals zero). Alternatively or additionally the simulators are invoked in turn until the outputs match to the extent required. Then the hybrid simulation moves on to the next change in external conditions.

Although sequential simulation as shown in Figure 4 might lead to faster convergence, the availability of computer resources may mean that it is quicker to execute the component simulations concurrently. In this case, the outer loop may be modified as in Figure 3 with a node that waits until all component simulations are complete before testing for convergence.

Incidentally this process can be extended to allow multiple instances of either simulator class to be executed within a single hybrid simulation. For example, a physics simulation could be split into a number of smaller components representing individual rooms or parts of a room (or even some other non-spatial division). Multiple physics simulations could interact with a network simulation, or vice versa.

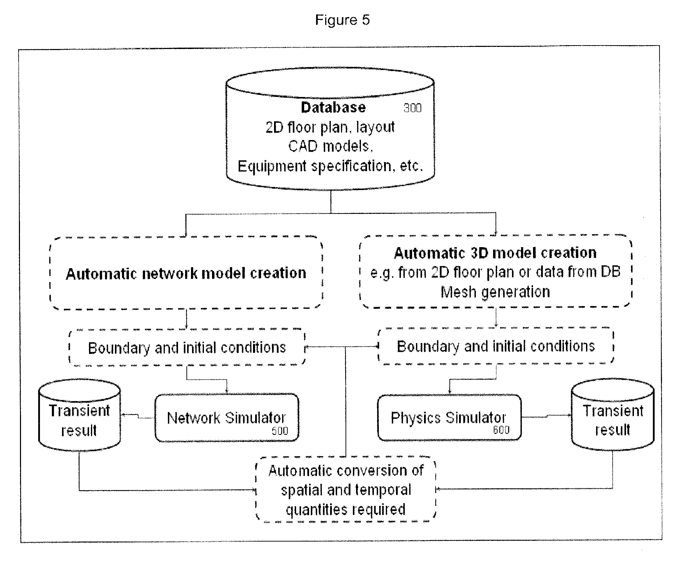

Figure 5 shows a simple overview of the hybrid simulator. The database 300 is used here for model generation. Looking first at the physics simulator, in the automatic 3D model creation, a 3D model of a data centre or other simulated system is created with commonly available building plans, such as a 2D floor plan or CAD model with equipment (servers, air conditioning units, backup power supply, etc). One particular feature of some invention embodiments is the automatic creation of a 3D model from a 2D floor plan. Commonly the 2D floor plan or other layout (for example of a PCB) is already in electronic CAD format, in which only paper documents may be available. These documents are scanned if necessary and the image mapped onto a 2D grid for the floor plan. The 3D model is then created by translation of the 2D model/plane in the 3^{rd} dimension. In any situation with insufficient or incomplete information then industry's standards or best practices are used to complete the model, if users cannot specify the information. Mesh generation for the physics simulator may be is automatic, for example with finite-difference or tetrahedral meshing. If any data centre (or other) equipment specifications are in 3D CAD format, then an automatic model preparation stage may be essential to remove some geometric features that have no influence on the analysis but whose omission can significantly reduce model size and analysis time.

In the boundary and initial conditions box, boundary and initial conditions (which both represent domain perimeter conditions) are set in the 3D model for analysis. Once again, with insufficient or incomplete information, the industry's standards or best practices is used to complete the model. Information such as heat source/sink, flow rates, etc. are commonly available from the equipment specification by manufacturers or routine measurements made in the data centre or other simulated system. Input from the network simulator is also provided, as explained hereinbefore.

The boundary and initial conditions are fed into physics simulator 600 producing a transient result representing the outcome of a set of simulation loops. This is fed to the boundary and initial condition box of the network simulation via a box for automatic conversion of spatial and temporal quantities.

In the automatic extraction of spatial and temporal quantities, the physics simulator's result is extracted and interpreted for the network simulator. The physics simulator commonly holds quantities of velocities, pressures, and temperatures, whereas the network simulator works with energy and heat rates. Thus quantity conversion and extraction is required. With this conversion it can offer redistribution of heat allocation for the network entities.

Turning to the network simulation, the first step is again automatic model creation using data and database 300. For example, the network connectivity and/or devices can be detected from electrical plans of the enclosure and/or device characteristics retrieved from a database of known device types.

The boundary and initial conditions are set as explained previously and these are fed to the network simulator 500. Transient results are produced as for the physics simulator and converted as explained previously for use in providing input conditions for the physics simulator.

Figure 5 does not show a dynamic situations box for changing conditions such as turning on/off an air-condition unit for one or both simulators. This functionality may however be provided and can offer a means to provide transient conditions for time-dependent elements such as server workload over a 24 hour period from data such as jobs in queue, sensors, records, etc. The results of such a simulation may include some time dependency.

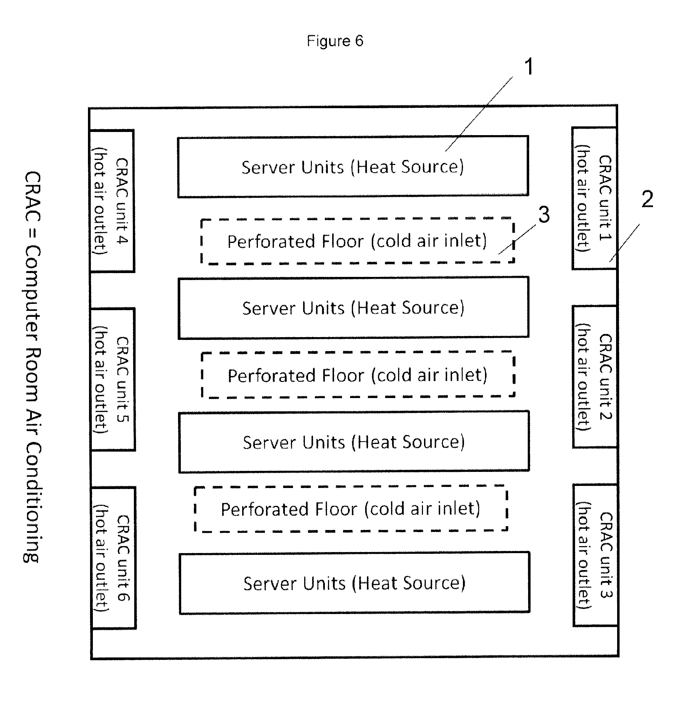

Figures 6, 7, 8 and 9 show the physical layout of a data centre and explain how the CFD (or physics) simulation operates in such a layout.

Figure 6 shows a typical 2D layout of a data centre hall. Server units acting as heat sources 1 are interspersed with cold air inlets in the form of portions of perforated floor 3. Computer room air-conditioning (CRAC) units 2 provide an outlet for hot air.

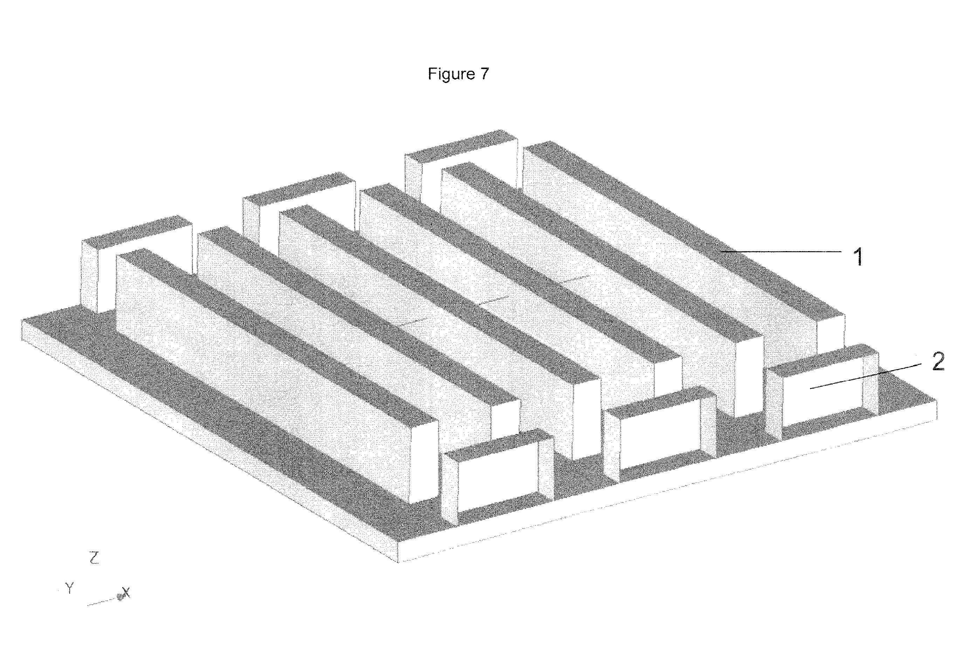

Figure 7 shows a 3D model constructed from the layout of Figure 6. Thus essentially the heights of the CRAC units and server units have been added to the model information.

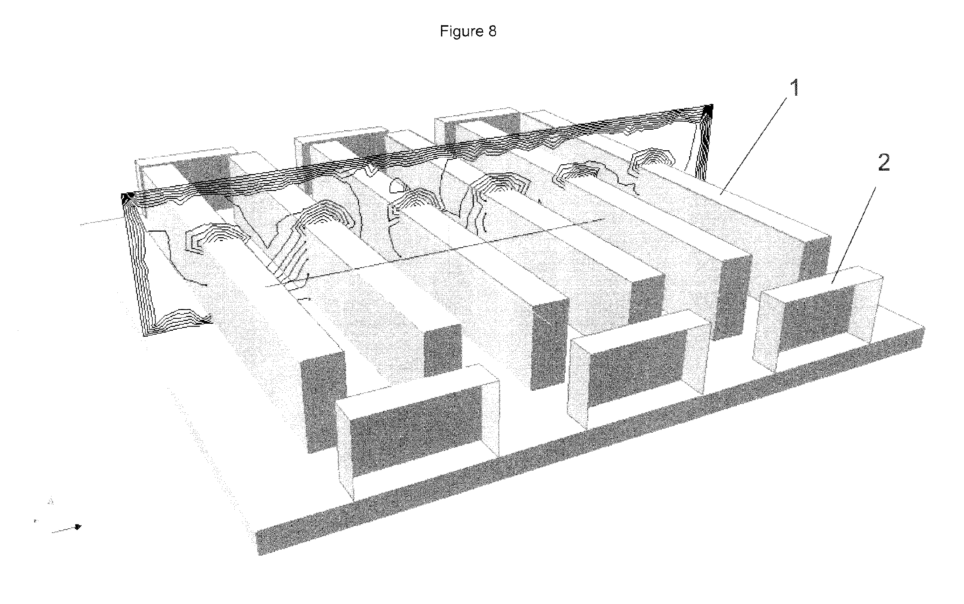

Figure 8 shows some of the results of the physics simulation in the form of data centre temperature contours. A "slice" of the temperature contours is shown at one position along the server units. As you would expect, there are many temperature contours around the top of each server indicating a high temperature gradient as heat is transferred away from the server. Here, the walls, floor and ceiling are set to a constant ambient temperature, and thus there is also a high temperature gradient near the walls, floor and ceiling.

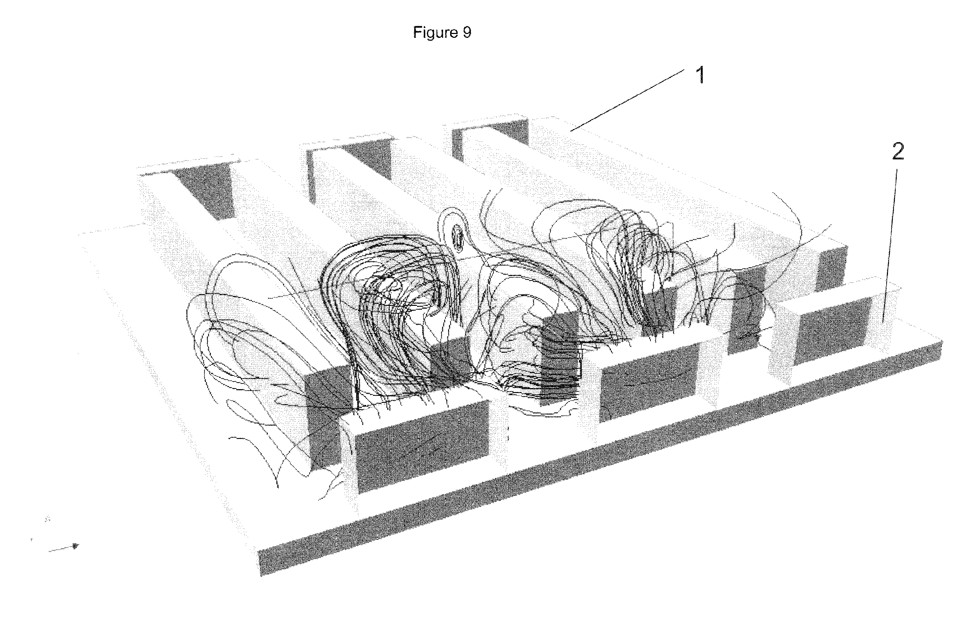

Figure 9 shows air flow streamlines of heat extraction for the front CRAC units in data centre depicted in Figures 6 to 8. Hot air is heated by the server units, sucked into the CRAC units, cooled and pumped back into the room as cool air through the perforated floor portions. The streamlines have been created by tracing back from outlets of the CRAC units (as defined in the simulation) along the convective flow path extracting heat from the server units out of the data centre.

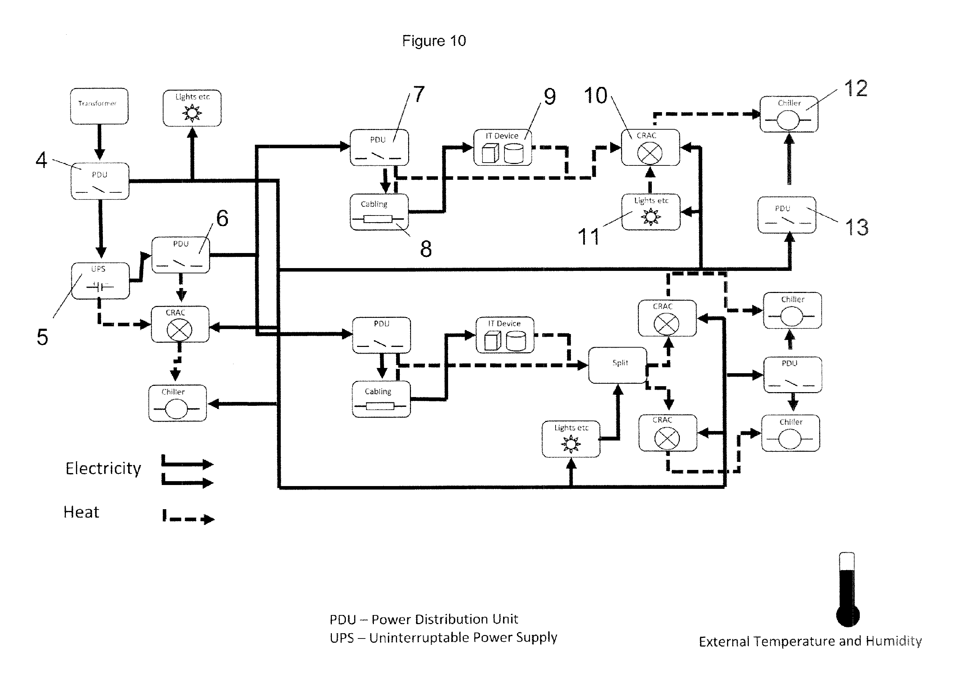

Figure 10 is a network diagram which demonstrates the kind of network simulation used in invention embodiments. Nodes in the form of devices which produce and/or use electricity and heat are shown in rectangular boxes. They are inter-connected by pathways for electricity, shown in unbroken lines and heat, shown in broken lines. The arrow in each case indicates the direction of transfer. External temperature and humidity may be taken into account as shown in the bottom right-hand corner.

This particular network diagram has a single main power distribution unit (PDU 4) providing an uninterruptible power supply 5 leading to further power distribution units 6, 7, 13 etc. The bulk of the diagram is divided into upper and lower sections. Each section has further power distribution units. The section shown in the upper part of the diagram has PDU 7 and PDU 13. This upper section also comprises cabling 8, one or more IT devices 9, a CRAC unit 10 and lights etc 11. There is also a chiller, which is fed from the main PDU 4 via PDU 13. The lower section is similar but has a slightly different layout. This division into sections may be spatial or for some other reason.

In the model, it is possible to calculate the electrical power input and/or output and the heat input and/or output for each device shown. Essentially, it is assumed that the heat output from the devices is fed directly to the CRAC unit (which removes the hot air) and from there to the chiller (which chills the hot air). However, using the results of the physics simulation, it is possible to produce a more accurate picture of the heat transferred to the CRAC unit and chiller, taking into effect convective heat transfer in the complex air flows and temperature gradients within the haul. For the purposes of the physics simulation, there is no requirement to separate the functions of the CRAC and chiller, but the cold air produced by the chiller and fed into the enclosure may be taken into consideration.

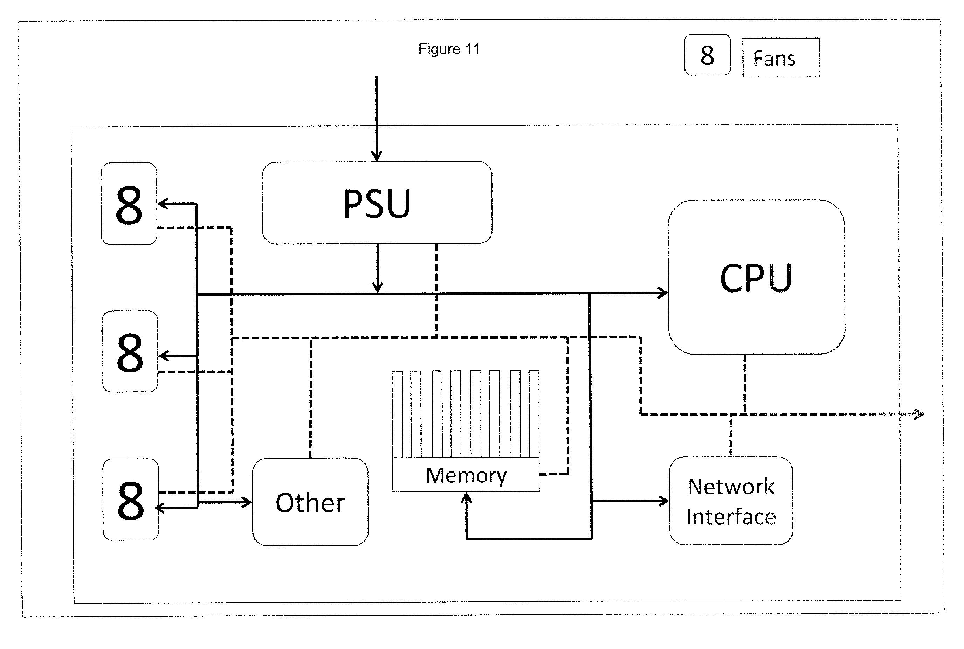

Figure 11 shows how a printed circuit board (PCB) can be portrayed in a network simulation. Again, flows of electricity are shown in unbroken lines and flows of heat are shown in broken lines with arrows indicating the direction of flow in each case. Electricity is fed through the power supply unit which in turn feeds the CPU, memory, network interface, fans and any other components/devices taken into account on the board. Heat is produced by all these devices and extracted using air flow generated by the fans from one side of the PCB.

## Claims

1. A simulation apparatus operable to simulate energy use in an enclosure containing devices including at least one heat source, the simulation apparatus comprising:
a fluid dynamics simulator arranged to simulate airflow and cooling within the enclosure; and
a device simulator arranged to simulate power input and heat output of the devices; wherein
the simulation apparatus is operable in a main cycle in which:
each of the fluid dynamics simulator and device simulator carries out a set of iterative simulation loops, the fluid dynamics simulator being initialised in a first loop of a set of loops with at least one start value derived from a previous loop of the device simulator, or the device simulator being initialised in a first loop of a set of loops with at least one start value derived from a previous loop of the fluid dynamics simulator.

2. A simulation apparatus according to claim 1, wherein the devices include at least one heat extractor, which requires energy for its cooling action, and wherein the simulators also take the heat extractor into consideration.

3. A simulation apparatus according to claim 1 or 2, wherein
the start values for the fluid dynamics simulator and device simulator represent heat, and preferably wherein
the start value for the device simulator represents heat delivered to any devices acting as heat extractors and the start value for the fluid dynamics simulator represents heat output by the heat source and optionally any other device acting as a heat source.

4. A simulation apparatus according to any of the preceding claims, wherein
an internal value converter is operable to derive the start value used in the device simulator from a value produced in the fluid dynamics simulator and conversely to derive the start value used in the fluid dynamics simulator from a value produced in the device simulator, and preferably wherein
the fluid dynamics simulator uses and/or produces values related to temperature and airflow at a specified surface, whereas the device simulator uses and/or produces device identifiers and values related to heat produced by the devices.

5. A simulation apparatus according to any of the preceding claims, wherein
a loop controller is operable to determine that a set of loops for the fluid dynamics simulator and a set of loops for the device simulator is to be carried out at the same time, as parallel sets of iterative simulation loops, or to determine that the sets of loops are to be carried out one after the other and in this case whether a set of loops for the fluid dynamics simulator or a set of loops for the device simulator is carried out first.

6. A simulation apparatus according to any of the preceding claims, wherein
a joint simulator convergence controller is operable to compare an outcome of the fluid dynamics simulator after its set of loops with an outcome of the device simulator after its set of loops and to repeat the main cycle as a repeat main cycle if the outcomes have not converged.

7. A simulation apparatus according to any of the preceding claims, wherein
the loop controller is operable to determine for a repeat main cycle whether a set of loops for the device simulator or fluid dynamics simulator is to be omitted.

8. A simulation apparatus according to any of the preceding claims, wherein
an individual simulator convergence controller operable to end a set of loops once a required degree of convergence of successive loops is reached.

9. A simulation apparatus according to any of the preceding claims, further comprising
an external condition input operable to input external conditions in a required format, for application before the iterative simulation loop sets in a main cycle.

10. A simulation apparatus according to any of the preceding claims, wherein
the device simulator is a network simulator, which models the devices using a logical network of interconnected nodes, with nodes representing a device and each interconnect representing a flow of energy between the devices.

11. A simulation apparatus according to any of the preceding claims, wherein the fluid dynamics simulator models the enclosure as a 3D space with airflows and temperature gradients between the devices in the enclosure.

12. A simulation apparatus according to claim 11, further comprising a 3D model tool for use with the fluid dynamics simulator, to create and/or simplify and/or provide suitable parameters for a 3D model in the fluid dynamics simulator.

13. A simulation apparatus according to claim 12, wherein the 3D model tool is operable to input a 2D plan and output a 3D model and/or to simplify the geometry of a 3D model for use in simulation and/or to set boundaries and external conditions for the fluid dynamics simulation.

14. A simulation apparatus according to any of the preceding claims, wherein the fluid dynamics simulator and device simulator are coded as separate software, so that they can be separately modified.

15. A method of simulating energy use in an enclosure containing devices including at least one heat source, the method comprising:
simulating airflow and cooling within the enclosure using a fluid dynamics simulation and
simulating power input and heat output of the devices using a device simulation;
wherein
a main cycle is provided in which:
each of the fluid dynamics simulation and device simulation operates in a set of iterative simulation loops, the fluid dynamics simulation being initialised in a first loop of a set of loops with at least one start value derived from a previous loop of the device simulation, or the device simulation being initialised in a first loop of a set of loops with at least one start value derived from a previous loop of the fluid dynamics simulation.

16. A computer program, which when downloaded onto a computing apparatus provides the simulation apparatus according to any of the preceding apparatus claims or which when executed on a computing apparatus carries out the method of the preceding method claim.
